# EUROPEAN PATENT SPECIFICATION

(11) **EP 2 997 783 B1**
(45) Date of publication and mention of the grant of the patent: **01.01.2020**
(21) Application number: 14785674.4
(22) Date of filing: 16.04.2014
(51) Int. Cl.: H04L 5/00, H04W 72/04, H04W 36/00, H04W 28/08

(54) **METHOD AND RADIO NODE FOR TRANSMITTING DOWNLINK SIGNALS**
VERFAHREN UND FUNKKNOTEN ZUR ÜBERTRAGUNG VON DOWNLINK-SIGNALEN
PROCÉDÉ ET NOEUD RADIO D'ÉMISSION DE SIGNAUX EN LIAISON DESCENDANTE

(30) Priority: 16.04.2013 US 201361812478 P; 09.08.2013 US 201361863946 P
(43) Date of publication of application: 23.03.2016
(73) Proprietor: Telefonaktiebolaget LM Ericsson (publ), 164 83 Stockholm (SE)
(72) Inventor: KOORAPATY, Havish, Saratoga, California 95070 (US); AXMON, Joakim, S-244 41 Kävlinge (SE); CHENG, Jung-Fu, Fremont, California 94539 (US); LARSSON, Daniel, S-186 53 Vallentuna (SE); HAMMARWALL, David, S-186 53 Vallentuna (SE)
(74) Representative: Ericsson
(86) International application number: PCT/SE2014/050473
(87) International publication number: WO 2014/171888

(56) References cited:
- WO-A1-2012/109790
- WO-A1-2014/091825
- US-A1- 2011 103 243
- US-A1- 2013 003 673
- HUAWEI ET AL: "Remaining details for the PDSCH starting symbol in TM10", 3GPP DRAFT; R1-124696, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. New Orleans, USA; 20121112 - 20121116 3 November 2012 (2012-11-03), XP050662740, Retrieved from the Internet: URL:http://www.3gpp.org/ftp/tsg_ran/WG1_RL 1/TSGR1_71/Docs/ [retrieved on 2012-11-03]
- PANTECH: 'Views on additional carrier types for CA in Rel-11' 3GPP TSG-RAN WG1 MEETING #66 , R1-112281 22 August 2011, pages 1 - 5, XP050537428
- NEC GROUP: 'DL Control channel enhancements with carrier aggregation solutions' 3GPP TSG-RAN WG1#66; R1- 112137 22 August 2011, pages 1 - 6, XP050537309

## Description

### Technical field

The present disclosure relates generally to a radio node of a cellular network and a User Equipment, UE, and respective methods therein, where downlink signals are transmitted by the radio node on a first frequency F1 using a first carrier type A supported by both legacy UEs and new UEs and on a second frequency F2 using a second carrier type B supported by the new UEs but not by the legacy UEs.

### Background

In the field of radio communication in cellular networks, the term "User Equipment, UE" is commonly used and will be used in this disclosure to represent any user-controlled wireless terminal, mobile phone, tablet or device capable of radio communication including receiving downlink signals transmitted from a serving radio node and sending uplink signals to the radio node. Further, the term "radio node", also commonly referred to as a base station, e-nodeB, eNB, etc., represents any node of a wireless cellular network that can communicate uplink and downlink radio signals with UEs. The radio nodes described here may, without limitation, include so-called macro nodes and low power nodes such as micro, pico, femto, Wifi and relay nodes, to mention some customary examples. In this disclosure, the term "eNB" is sometimes used instead of radio node.

In a cellular network employing techniques, procedures and features according to Long Term Evolution, LTE, it is possible for radio nodes of the cellular network to transmit downlink signals on basically two different types of carriers which are commonly referred to as a "Legacy Carrier Type", LCT, and a "New Carrier Type", NCT. In general, the NCT generates less interference and overhead than the LCT and it is therefore sometimes beneficial to apply the NCT on downlink transmissions in a cell to improve performance. Throughout this disclosure, these two types of carriers will be discussed.

In this context, the first type of carrier, LCT, is also known as a Release 8, or Rel-8, backward compatible carrier, and it may be used such that any UEs configured for Rel-8, Rel-9 and/or Rel-10 can operate on it, i.e. receive signals on the LCT.

For simplicity this carrier is referred to as the first carrier type A. UEs supporting only such a carrier are referred to as "legacy" UEs denoted A in this description. On the other hand, the second type of carrier, NCT, cannot be used by UEs not configured for releases beyond Rel-10. For simplicity this carrier is referred to as the second carrier type B. UEs supporting such a carrier are referred to as "new" UEs denoted B in this description to distinguish them from the legacy UEs A.

An inherent property of the NCT is thus that a legacy UE cannot access it and operate on it. Therefore migration from an LCT to an NCT should preferably be made such that neither UE performance nor network performance is negatively impacted.

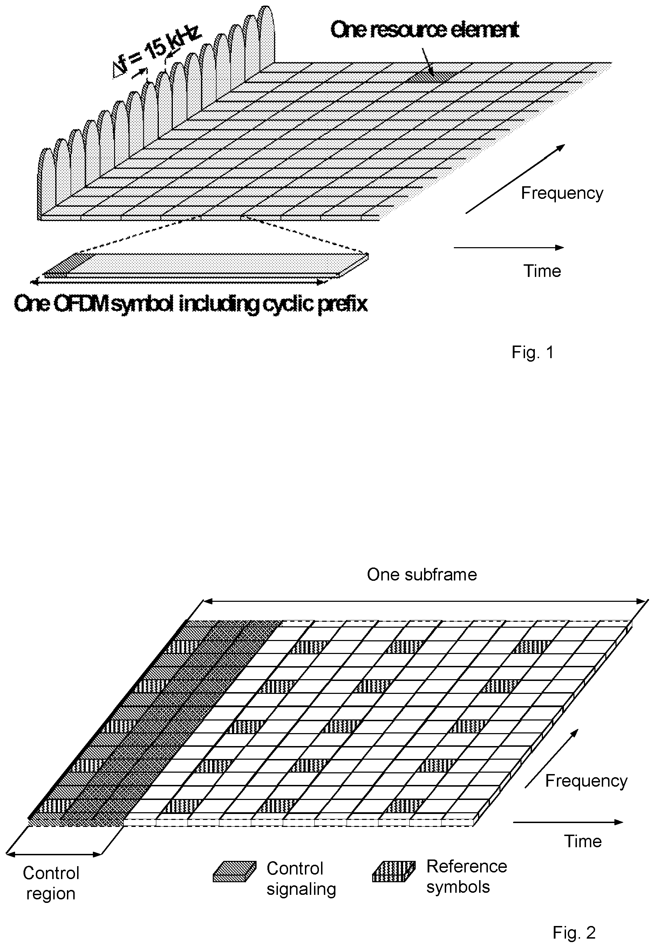

LTE uses Orthogonal Frequency Division Multiplex, OFDM, in the downlink and Discrete Fourier Transform, DFT-spread OFDM in the uplink. The basic LTE downlink physical resource can thus be seen as a time-frequency grid as illustrated in Fig. 1, where each resource element corresponds to one OFDM subcarrier during one OFDM symbol interval. In the time domain, LTE downlink transmissions are organized into radio frames of 10 ms, each radio frame comprising ten equally-sized subframes of length Tsubframe = 1 ms. Furthermore, the resource allocation in LTE is typically described in terms of resource blocks, where a resource block corresponds to one slot of 0.5 ms in the time domain and 12 contiguous subcarriers in the frequency domain. A pair of two adjacent resource blocks in time of 1.0 ms is known as a resource block pair. Resource blocks are numbered in the frequency domain, starting with 0 from one end of the system bandwidth.

The notion of virtual resource blocks (VRB) and physical resource blocks (PRB) has been introduced in LTE. The actual resource allocation to a UE is made in terms of VRB pairs. There are two types of resource allocations, localized and distributed. In the localized resource allocation, a VRB pair is directly mapped to a PRB pair, hence two consecutive and localized VRBs are also placed as consecutive PRBs in the frequency domain. On the other hand, the distributed VRBs are not mapped to consecutive PRBs in the frequency domain, thereby providing frequency diversity for a data channel transmitted using these distributed VRBs.

Downlink transmissions are dynamically scheduled, i.e., in each subframe the radio node transmits control information about to which terminals data is transmitted and on which resource blocks the data is transmitted, in the current downlink subframe. This control signaling is typically transmitted in the first 1, 2, 3 or 4 OFDM symbols in each subframe and the number n=1,2,3 or 4 is known as the Control Format Indicator (CFI). The downlink subframe also contains common reference symbols, which are known to the receiver and used for coherent demodulation of e.g. the control information. A downlink transmission scheme with CFI=3 OFDM symbols as control is illustrated in Fig. 2. In this disclosure, the term Cell-specific Reference Signal, CRS, is used to represent a signal that comprises such common reference symbols which can be used for demodulation. Throughout this disclosure, CRS may also refer to a Common Reference Signal.

From LTE Rel-11 onwards, the above described resource assignments can also be scheduled on the enhanced Physical Downlink Control Channel (ePDCCH). The ePDCCH occupies only some PRBs in the system and can be multiplexed with other data transmissions on the Physical Downlink Shared Channel (PDSCH). For Rel-8 to Rel-10 only Physical Downlink Control Channel (PDCCH) is available. The ePDCCH is only used to schedule UE-specific transmissions.

The second carrier type B in this disclosure, i.e. the NCT, is a carrier type that may contain either no CRS at all or much less CRS either in frequency by for example a reduction of the bandwidth the CRS covers to be smaller than the total carrier bandwidth, or in time by for example not transmitting any CRS in some pre-defined subframes, or in both frequency and time, as compared to a carrier type A. Further, the second carrier type B may not contain any PDCCH but only the enhanced PDCCH, which does not rely on CRS for demodulation. The second carrier type B is attractive and often beneficial to use for having certain energy efficiency properties, a low control and reference signal overhead and a low level of interference generation in networks when compared to the carrier type A.

In this disclosure, the terms "legacy" UEs, A, and "new" UEs, B, will be used for simplicity such that these terms are defined depending on whether they support the second carrier type B or not as follows. A new UE is defined as a UE supporting the second carrier type B while a legacy UE is defined as a UE not supporting the second carrier type B. Thus in this context, the terms "new" and "legacy" should not be understood in any limiting sense apart from the above definitions. Consequently, the first carrier type A is supported by both legacy UEs A and new UEs B and the second carrier type B is supported by the new UEs B but not by the legacy UEs A. For example, the lack of CRS and/or PDCCH will make the second carrier type B not accessible by legacy UEs A when it is deployed, i.e. it is not backwards compatible.

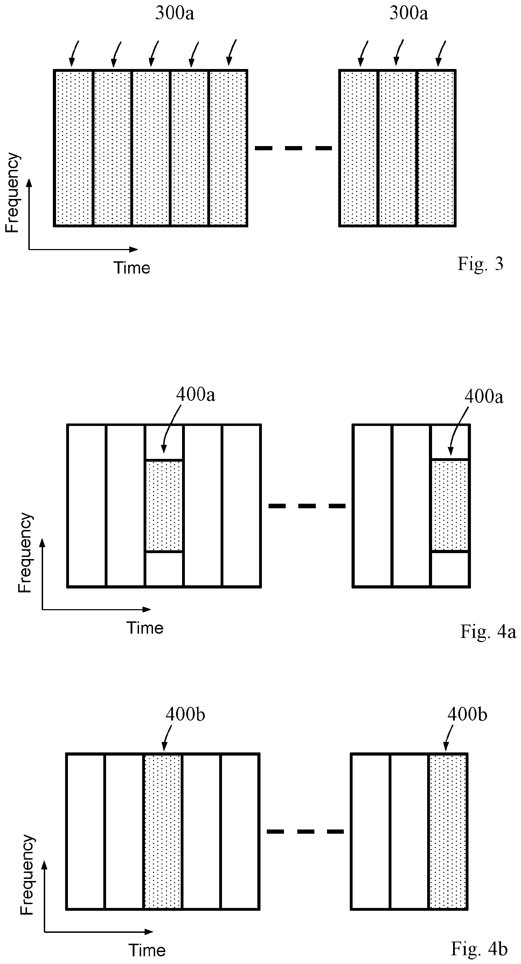

Examples of how the carrier type A and the carrier type B may be employed are illustrated in Fig. 3 and Figs 4a, 4b, respectively. It should be noted that the carrier type A in Fig. 3 comprises CRSs which are transmitted more or less continuously across the total carrier bandwidth in all subframes 300a, as illustrated by the dotted fields, which enables a legacy UE to receive and use the CRSs at any time. On the other hand, the carrier type B in Figs 4a and 4b comprises CRSs which are transmitted only in a few subframes 400a, 400b, as illustrated by the dotted fields, while the blank fields are subframes with no CRSs. Fig. 4a illustrates that the CRSs are transmitted in a limited part of the frequency band of the carrier in specific subframes 400a while in Fig. 4b the CRSs are transmitted across the entire frequency band in specific subframes 400b. It is assumed that a legacy UE is not capable of receiving and using the CRSs in the scheme of Fig. 4a or Fig. 4b other than by chance which is of very low probability.

It is thus a problem that as long as there are legacy UEs present in a cell and in any neighboring cells, the radio node needs to transmit the carrier type A instead of the carrier type B, to enable the legacy UEs to operate properly. Thereby, the benefits of applying the carrier type B cannot be obtained in a cell whenever there are legacy UEs present in the area without degrading performance in the legacy UE(s).

WO 2012/109790 A1 describes a first carrier of a carrier aggregation system that haas a downlink control region which may selectively be enabled and disabled. In case the first carrier is disabled, the downlink control region of a second carrier of the carrier aggregation system is used to cross-schedule a UE on the first carrier.

### Summary

It is an object of embodiments described herein to address at least some of the problems and issues outlined above. It is possible to achieve this object and others by using apparatus including a radio node of a cellular network and a UE, and methods therein, as defined in the attached independent claims. The invention is defined in the appended claims.

According to one aspect, a method is performed by a radio node of a cellular network. The radio node is operable for radio communication of data with a User Equipment, UE, wherein a first carrier type A is applicable for serving both legacy UEs and new UEs and a second carrier type B is applicable only for serving new UEs, and wherein the UE is configured to support both the first carrier type A and the second carrier type B. In this method, the radio node applies the first carrier type A for downlink signals on a first frequency F1, and switches between applying the second carrier type B and at least partly applying the first carrier type A for downlink signals on a second frequency F2 in order to allow the legacy UEs to measure and/or be served on the second frequency F2. The radio node further transmits to the UE an indicator in a downlink assignment for data on a data channel, the indicator indicating to the UE whether Cell-specific Reference Signal, CRS, resource elements are used for transmitting the data to the UE, thereby enabling the UE to determine a mapping for the data channel depending on the indicator.

According to another aspect, a radio node of a cellular network is operable for radio communication of data with a User Equipment, UE, wherein a first carrier type A is applicable for serving both legacy UEs and new UEs and a second carrier type B is applicable only for serving new UEs, and wherein the UE is configured to support both the first carrier type A and the second carrier type B. The radio node comprises a communication unit which is configured to apply the first carrier type A for downlink signals on a first frequency F1, and a switching unit which is configured to switch between applying the second carrier type B and at least partly applying the first carrier type A for downlink signals on a second frequency F2 in order to allow the legacy UEs to measure and/or be served on the second frequency F2.

The communication unit is also configured to transmit to the UE an indicator in a downlink assignment for data on a data channel, the indicator indicating to the UE whether Cell-specific Reference Signal, CRS, resource elements are used for transmitting the data to the UE, thereby enabling the UE to determine a mapping for the data channel depending on the indicator.

According to another aspect, a method is performed by a User Equipment, UE, the UE being operable for radio communication of data with a radio node of a cellular network in which a first carrier type A is applicable for serving both legacy UEs and new UEs and a second carrier type B is applicable only for serving new UEs, wherein the radio node applies the first carrier type A for downlink signals on a first frequency F1 and switches between applying the second carrier type B and at least partly applying the first carrier type A for downlink signals on a second frequency F2 in order to allow the legacy UEs to measure and/or be served on the second frequency F2. The UE is configured to support both the first carrier type A and the second carrier type B. In this method, the UE receives downlink signals with data on a data channel from the radio node on the second frequency F2, and determines a mapping for the data channel depending on an indicator received from the radio node in a downlink assignment for the data, the indicator indicating to the UE whether Cell-specific Reference Signal, CRS, resource elements are used for transmitting the data to the UE.

According to another aspect, a User Equipment, UE is operable for radio communication of data with a radio node of a cellular network in which a first carrier type A is applicable for serving both legacy UEs and new UEs and a second carrier type B is applicable only for serving new UEs, wherein the radio node applies the first carrier type A for downlink signals on a first frequency F1 and switches between applying the second carrier type B and at least partly applying the first carrier type A for downlink signals on a second frequency F2 in order to allow the legacy UEs to measure and/or be served on the second frequency F2. The UE is configured to support both the first carrier type A and the second carrier type B. The UE comprises a communication unit which is configured to receive downlink signals with data on a data channel from the radio node on the second frequency F2, and a logic unit which is configured to determine a mapping for the data channel depending on an indicator received from the radio node in a downlink assignment for the data, the indicator indicating to the UE whether Cell-specific Reference Signal, CRS, resource elements are used for transmitting the data to the UE.

The above methods and apparatus may be configured and implemented according to different optional embodiments to accomplish further features and benefits, to be described below.

### Brief description of drawings

The solution will now be described in more detail by means of exemplary embodiments and with reference to the accompanying drawings, in which:
Fig. 1 is a schematic diagram illustrating how downlink physical resources can be configured in frequency and over time in a cellular network employing LTE, according to the prior art.
Fig. 2 is a schematic diagram illustrating how a downlink subframe may be configured in a cellular network employing LTE, according to the prior art.
Fig. 3 is a schematic diagram illustrating how a Legacy Carrier Type may be configured when using the solution.
Fig. 4a and 4b are schematic diagrams illustrating two examples of how a New Carrier Type may be configured when using the solution.
Fig. 5 is a flow chart illustrating a procedure in a radio node, according to some possible embodiments.
Fig. 6 is a block diagram illustrating how a radio node may be configured, according to further possible embodiments.
Fig. 7 is a flow chart illustrating a procedure in a UE, according to some possible embodiments.
Fig. 8 is a block diagram illustrating how a UE may be configured, according to further possible embodiments.
Fig. 9 illustrates a communication scenario where a Legacy Carrier Type and a New Carrier Type are employed separately.
Fig. 10 illustrates a communication scenario where a mix of a Legacy Carrier Type and a New Carrier Type is employed.
Fig. 11 is a flow chart illustrating actions which may be performed by a radio node, according to further possible embodiments.
Fig. 12 is a schematic diagram illustrating how measurement gaps may be employed when using the solution, according to further possible embodiments.
Fig. 13 is a schematic diagram illustrating how UEs not capable of using measurement gaps may be supported when using the solution, according to further possible embodiments.
Fig. 14 is a flow chart illustrating actions which may be performed by a radio node when carrier aggregation is used, according to further possible embodiments.

### Detailed description

In this solution, it has been realized that a migration from employing the LCT to employing the NCT can be made significantly easier and the network performance and/or UE performance could be improved if a downlink carrier transmitted by a radio node can be flexibly switched between applying the NCT, i.e. the first carrier type A, and at least partly applying the LCT, i.e. the second carrier type B, depending on which UEs are currently receiving signals on the carrier. However, knowing which UEs are receiving signals is not simple especially when there are IDLE mode UEs camping on the carrier. This disclosure describes methods and features to enable such flexible switching on a relatively fast time scale, e.g. on a subframe basis. Various embodiments are described that can be used when operating the network so that a UE configured for both carrier types A and B is able to receive data on a carrier being switched between carrier type B and carrier type A, and so that the access of legacy UEs to the carrier is also enabled.

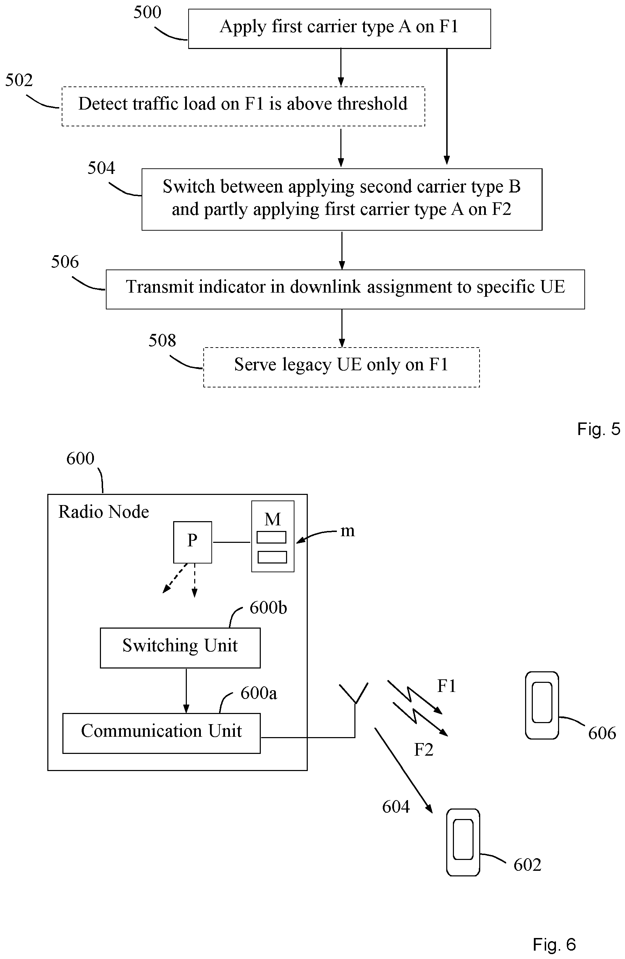

An example of a procedure with actions, performed by a radio node of a cellular network will now be described with reference to the flow chart in Fig. 5, which may be used to overcome or reduce the above-described problems. In this procedure it is assumed that the radio node is operable for radio communication of data with a specific UE. The radio node transmits downlink signals on a carrier of a first frequency F1 and on a carrier of a second frequency F2. It is also is assumed that a first carrier type A is applicable for serving both legacy UEs and new UEs and a second carrier type B is applicable only for serving new UEs. The specific UE in this procedure is configured to support both the first carrier type A and the second carrier type B. The radio node is thus arranged or configured to perform the actions of the flow chart in Fig. 5.

A first **action 500** illustrates that the radio node applies a first carrier type A for downlink signals on the first frequency F1. Applying the first carrier type A may include transmitting various control and broadcast signals which both legacy UEs A and new UEs B are capable of using, e.g. for synchronization, reading cell-specific parameters, measuring of reference signals, and so forth.

The radio node is also able to apply a second carrier type B for downlink signals on the second frequency F2. Thus, the first carrier type A is supported by both legacy UEs A and new UEs B and the second carrier type B is supported by the new UEs B but not by the legacy UEs A. Any legacy UEs may thus be served on the first frequency F1 where the first carrier type A is applied, but not on the second frequency F2 when the second carrier type B is applied, since legacy UEs only support the first carrier type A.

In an optional **action 502**, the radio node may detect that a current traffic load on the first frequency F1 is above a certain threshold, due to many UEs being served on F1, which means that it may be desirable to offload the first frequency F1 by moving one or more of the UEs from F1 to be served on the second frequency F2 instead. However, a legacy UE cannot be served on F2 when the second carrier type B is applied. It should be noted that the second frequency F2 may not be used at all, i.e. turned off, during periods of low traffic load on the first frequency F1, e.g. below the above-mentioned threshold, which may be desirable for reducing power consumption and interference whenever possible.

In another **action 504**, the radio node uses the second frequency F2 and switches between applying the second carrier type B and at least partly applying the first carrier type A for downlink signals on the second frequency F2 in order to allow the legacy UEs to measure and/or be served on the second frequency F2. Thereby, at least one of the legacy UEs A is thus enabled to receive and at least measure downlink signals on the second frequency F2 when the first carrier type A is at least partly applied on the second frequency F2. For example, partly applying the first carrier type A on frequency F2 may comprise transmitting a reference signal such as the above-described CRS which thus enables a legacy UE to measure the reference signal and evaluate the cell for communication based on the measured reference signal.

In another **action 506**, the radio node transmits to the specific UE an indicator in a downlink assignment for data on a data channel, the indicator indicating to the UE whether Cell-specific Reference Signal, CRS, resource elements are used for transmitting the data to the UE, thereby enabling the UE to determine a mapping for the data channel depending on the indicator. In this way, the specific UE is able to properly receive data on the second frequency F2, based on the above mapping, when F2 is switched between carrier type B and carrier type A.

A final shown optional **action 508** illustrates that the radio node may also serve at least one legacy UE A only on the first frequency F1 while enabling the at least one legacy UE A to receive and at least measure downlink signals on the second frequency F2 when the first carrier type A is at least partly applied for downlink signals on the second frequency F2.

In this solution, it is an advantage that since the at least one legacy UE A is being served by the radio node only on the first frequency F1, the radio node is able to switch between the first and second carrier types A, B on the second frequency F2 very rapidly since this switching can be handled by any new UE being served on the second frequency F2 without having to be handed over to the first frequency F1. It is also an advantage that a new UE, such as the specific UE above, is able to properly receive data on the second frequency F2, based on the above mapping given by the indicator in the downlink assignment, when the carrier on F2 is switched between carrier type B and carrier type A.

For example, it is further possible for the radio node to indicate different data channel mappings for a data channel by an indicator in a so-called "PDSCH RE Mapping and Quasi-co-colocation Indicator field", or PQI field for short, in a downlink assignment to the new UE B, wherein each data channel mapping gives a starting OFDM symbol for the data channel and/or indicates that the data channel is not mapped to Resource Elements, REs, that can be associated with one or several CRS antenna port(s). The new UE B can then determine a mapping for the data channel depending on the received indicator.

Another advantage is that the radio node is able to apply the first carrier type A partly on F2 since the second carrier type B can also be applied partly on the second frequency F2 at the same time to achieve the above-mentioned benefits of the second carrier type B in terms of reduced interference and overhead, and still enabling the legacy UE(s) A to receive and at least measure downlink signals from the radio node on the second frequency F2.

A detailed but non-limiting example of how a radio node of a cellular network may be structured with some possible functional entities such as modules, circuits or units, to bring about the above-described functionality of the radio node, is illustrated by the block diagram in Fig. 6. In this figure, the radio node 600 is operable for radio communication of data with a UE 602. It is again assumed that a first carrier type A is applicable for serving both legacy UEs A and new UEs B, and that a second carrier type B is applicable only for serving the new UEs B but not by the legacy UEs A. The UE 602 is configured to support both the first carrier type A and the second carrier type B. The radio node 600 may be configured to operate according to any of the examples of employing the solution as described above and as follows. In particular, the radio node 600 may be arranged or configured to perform at least the actions of the flow chart in Fig. 5 in the manner described above.

The radio node 600 may be described such that it comprises means configured to:
- apply the first carrier type A for downlink signals on a first frequency F1,
- switch between applying the second carrier type B and at least partly applying the first carrier type A for downlink signals on a second frequency F2 in order to allow the legacy UEs to measure and/or be served on the second frequency F2, and
- transmit to the UE 602 an indicator in a downlink assignment for data on a data channel, the indicator indicating to the UE whether Cell-specific Reference Signal, CRS, resource elements are used for transmitting the data to the UE, thereby enabling the UE to determine a mapping for the data channel depending on the indicator.

The radio node 600 may also be described such that the radio node 600 comprises a suitable **communication unit 600a** with radio circuitry, the communication unit 600a being configured to apply the first carrier type A for downlink signals on a first frequency F1. The communication unit 600a may also be configured to apply the second carrier type B for downlink signals on the second frequency F2. The radio node 600 also comprises a **switching unit 600b** which is configured to switch between applying the second carrier type B and at least partly applying the first carrier type A for downlink signals on the second frequency F2, in order to allow the legacy UEs to measure and/or be served on the second frequency F2. Thereby, any of the legacy UEs A is able to receive downlink signals on the second frequency F2 when the first carrier type A is applied for downlink signals on the second frequency F2.

The communication unit 600a is further configured to transmit to the UE 602 an indicator 604 in a downlink assignment for the data on a data channel, the indicator 604 indicating to the UE whether CRS resource elements are used for transmitting the data to the UE, thereby enabling the UE to determine a mapping for the data channel depending on the indicator 604.

Several optional embodiments are possible in the above-described procedure of Fig. 5 and the radio node of Fig. 6. In a possible embodiment, the radio node may indicate to the UE different data channel mappings by the downlink assignment depending on whether carrier type B is at least partly applied. In another possible embodiment, the indicator 604 may be a PQI field in the downlink assignment. In this case the radio node 600 may indicate the different data channel mappings for the data channel by the PQI field, wherein each data channel mapping gives the starting OFDM symbol for the data channel and/or indicates that the data channel is not mapped to resource elements that can be associated with one or several CRS antenna ports.

The communication unit 600a may also be configured to serve at least one legacy UE 606 only on the first frequency F1 while enabling the at least one legacy UE 606 to receive and at least measure downlink signals on the second frequency F2 when the first carrier type A is at least partly applied for downlink signals on the second frequency F2, which has been explained above.

In further possible embodiments, the radio node 600 may transmit CRSs when the first carrier type A is at least partly applied for downlink signals on the second frequency F2, which was also mentioned above, to enable the at least one legacy UE 606 to perform CRS measurements on the second frequency F2, e.g. when being served by the radio node 600 on the first frequency F1. In another possible embodiment, the radio node 600 may in that case move or hand over the at least one legacy UE 606 from the first frequency F1 to the second frequency F2 based on the CRS measurements, e.g. upon detecting heavy traffic load on the carrier of F1 as in action 504 above, such that the at least one legacy UE 606 is connected to the radio node 600 on the second frequency F2. This is possible since the at least one legacy UE 606 will be able to use the downlink signals on the second frequency F2 when the first carrier type A is at least partly applied. In a further possible embodiment, the radio node 600 may move or hand over the at least one legacy UE 606 from the second frequency F2 back to the first frequency F1 when the radio node 600 has detected that the first frequency F1 is not heavily loaded by traffic.

In another possible embodiment, the radio node 600 may instruct the at least one legacy UE 606 to communicate data both over the first frequency F1 and over the second frequency F2 when the first carrier type A is at least partly applied on F2. Thereby, a higher data rate may be obtained for the at least one legacy UE 606 by adding radio resources from F2 to the radio resources of F1 used by the legacy UE(s) 606.

In another possible embodiment, a fraction of time when at least partly applying the first carrier type A for downlink signals on the second frequency F2 may be dependent on traffic load on the first frequency F1. In other words, the period of time when the first carrier type A is at least partly applied on F2 relative to the period of time when the second carrier type B is applied on F2 may be selected to be long when the traffic load on the first frequency F1 is high, and short when the traffic load on the first frequency F1 is low. The relation between the periods of time of applying carrier types A and B, respectively, may thus be determined depending on the current traffic load on F1.

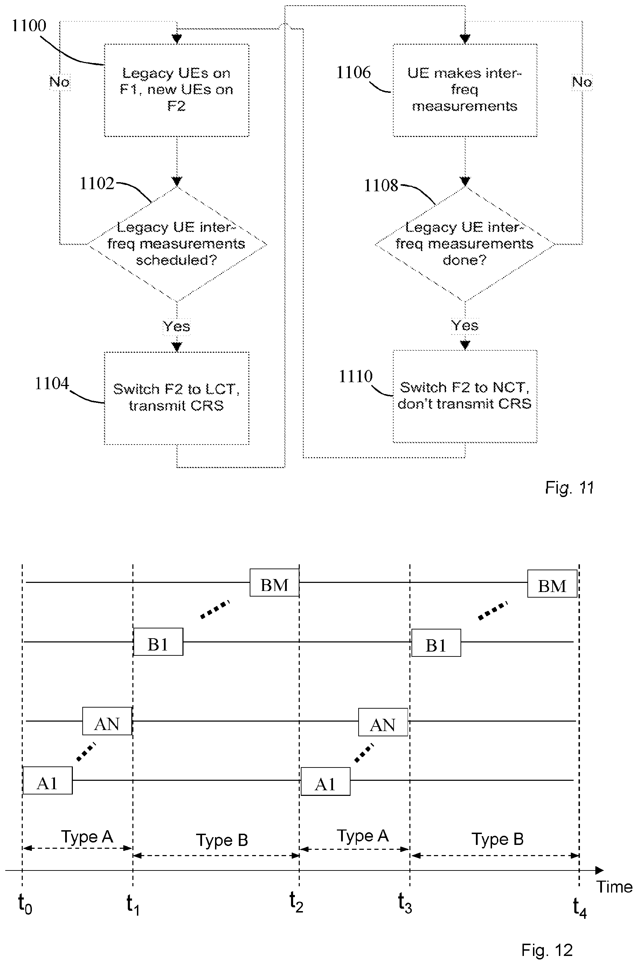

In another possible embodiment, a first set of measurement gaps "A1-AN" may be configured on the first frequency F1 for legacy UEs A and/or new UEs B when the first carrier type A is at least partly applied for downlink signals on the second frequency F2. Thereby, the legacy UEs A and/or the new UEs B are allowed to perform signal measurements on the second frequency F2 during the first set of measurement gaps. In another possible embodiment, a second set of measurement gaps "B1-BM" may further be configured on the first frequency F1 for the new UEs B but not for the legacy UEs A when the second carrier type B is applied for downlink signals on the second frequency F2, thereby allowing the new UEs B to perform signal measurements on the second frequency F2 during the second set of measurement gaps. In this way, the first set of measurement gaps "A1-AN" and the second set of measurement gaps "B1-BM" will be configured in turns on the first frequency F1 in a repeated fashion, thus allowing for measurements on the second frequency F2 by UEs being served on the first frequency F1 as specified above. The latter two embodiments will be described in more detail later below in terms of an example illustrated in Fig. 12.

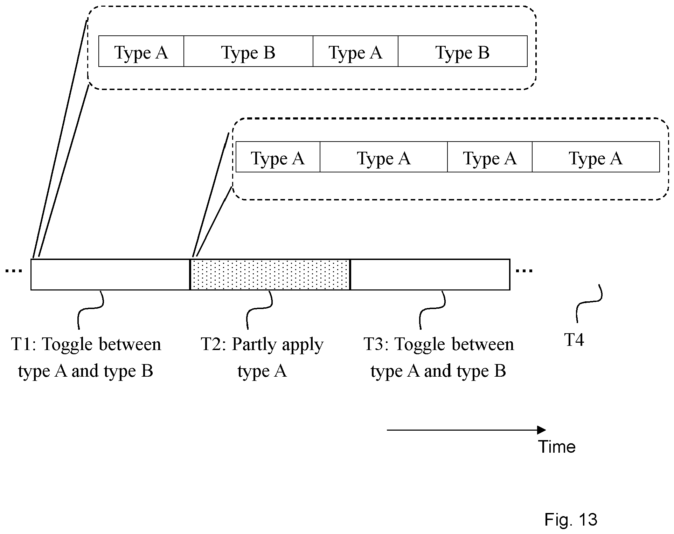

In another possible embodiment, the radio node 600 may switch between applying the second carrier type B and at least partly applying the first carrier type A for downlink signals on the second frequency F2 during a first set of time intervals T1, T3..., and may further apply only the first carrier type A for downlink signals on the second frequency F2 during a second set of time intervals T2, T4..., thereby allowing UEs not supporting measurement gaps to perform signal measurements on the second frequency F2 during the second set of time intervals. This embodiment will be described in more detail later below in terms of an example illustrated in Fig. 13. For example, the time intervals in the second set of time intervals may exceed an inter-frequency reporting period such that the UEs are able to report a measurement before making the next measurement.

In another possible embodiment, the radio node 600 may perform the switching between applying the second carrier type B and at least partly applying the first carrier type A on the second frequency F2 at certain time periods or after detecting that the traffic load on the first frequency F1 is above a threshold, e.g. as of action 502 above.

In another possible embodiment, the radio node 600 may enable new UEs B to distinguish between the second carrier type B and the first carrier type A on the second frequency F2 by at least one of:
- explicit or implicit signalling of carrier type to the new UEs B,
- different locations or different relative spacing of primary or secondary synchronization signals, PSS/SSS, on the second frequency F2 for the first and second carrier types A and B, and
- presence of CRS or other type A carrier signals on the second frequency F2 when applying the first carrier type A and absence of CRS or other type A carrier signals on the second frequency F2 when applying the second carrier type B.

In another possible embodiment, the radio node 600 may indicate to a UE capable of receiving the second carrier type B, i.e. a new UE such as UE 602, different data channel mappings by a downlink assignment depending on whether carrier type B is at least partly applied. In that case, the radio node may indicate the different data channel mappings for the data channel by a PQI field in a downlink assignment, wherein each data channel mapping gives the starting OFDM symbol for the data channel and/or may indicate that the data channel is not mapped to resource elements that can be associated with one or several CRS antenna port(s). This embodiment will be described in more detail later below.

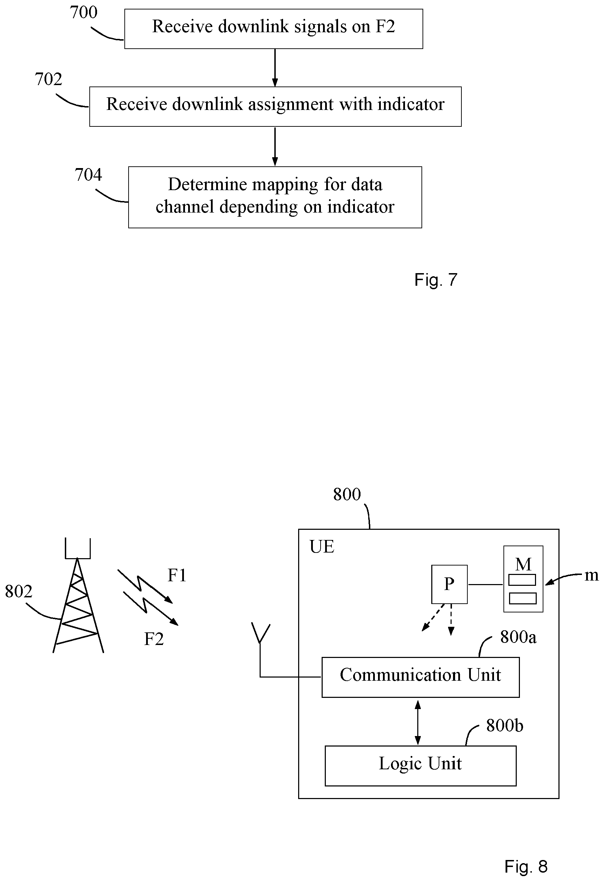

An example of a procedure with actions, performed by a UE will now be described with reference to the flow chart in Fig. 7, which may be used as well to overcome or reduce the above-described problems. The UE is operable for radio communication with a radio node of a cellular network in which a first carrier type A is applicable for serving both legacy UEs and new UEs and a second carrier type B is applicable only for serving new UEs. In this procedure the radio node applies the first carrier type A for downlink signals on a first frequency F1 and switches between applying the second carrier type B and at least partly applying the first carrier type A for downlink signals on a second frequency F2 in order to allow the legacy UEs to measure and/or be served on the second frequency F2. The UE of this procedure is configured to support both the first carrier type A and the second carrier type B, i.e. having capability as that of the above-described new UEs. As explained above, the first carrier type A is supported by both legacy UEs A and new UEs B and the second carrier type B is supported by the new UEs B but not by the legacy UEs A. The UE is thus arranged or configured to perform the actions of the flow chart in Fig. 7.

A first **action 700** illustrates that the UE receives downlink signals with data on a data channel from the radio node on the second frequency F2.

A next **action 702** illustrates that the UE receives a downlink assignment with an indicator from the radio node. A final **action 704** illustrates that the UE determines a mapping for the data channel depending on the indicator received in the downlink assignment from the radio node in action 702. The indicator indicates to the UE whether CRS resource elements, or CRS REs, are used for transmitting the data to the UE. This solution provides an advantage since it allows the UE to remain connected to the radio node and receive data while the carrier type applied on F2 is switched between type A and type B either fully or partly. In particular, the UE will know from the indicator if there is any data to receive in resource elements that may otherwise be used for transmitting the CRS. Since the UE can remain connected on F2 during the switch back and forth between carrier types A and B, the radio node is able to switch between carrier type A and carrier type B more often and rapidly, e.g. on a subframe basis, thus operating carrier type B to a greater extent, and thereby being able to generally increase throughput and capacity in the network.

A detailed but non-limiting example of how a UE may be structured with some possible functional entities such as modules, circuits or units, to bring about the above-described functionality of the UE, is illustrated by the block diagram in Fig. 8. In this figure, the UE 800 is operable for radio communication of data with a radio node 802 of a cellular network in which a first carrier type A is applicable for serving both legacy UEs and new UEs and a second carrier type B is applicable only for serving new UEs. As in the above example of Fig. 7, the radio node 802 applies the first carrier type A for downlink signals on a first frequency F1 and switches between applying the second carrier type B and at least partly applying the first carrier type A for downlink signals on a second frequency F2 in order to allow the legacy UEs to measure and/or be served on the second frequency F2. Further, the UE 800 is configured to support both the first carrier type A and the second carrier type B. The UE 800 may be configured to operate according to any of the examples of employing the solution as described above and as follows. In particular, the UE 800 may be arranged or configured to perform at least the actions of the flow chart in Fig. 7 in the manner described above.

The UE 800 may be described such that it comprises means configured to:
receive downlink signals with data on a data channel from the radio node 802 on the second frequency F2, and
determine a mapping for the data channel depending on an indicator received from the radio node 802 in a downlink assignment for the data, the indicator indicating to the UE 800 whether Cell-specific Reference Signal, CRS, resource elements are used for transmitting the data to the UE 800.

The UE 800 may also be described such that the UE 800 comprises a **communication unit 800a** which is configured to receive downlink signals with data on a data channel from the radio node 802 on the second frequency F2 The UE 800 also comprises a **logic unit 800b** which is configured to determine a mapping for the data channel depending on an indicator received from the radio node 802 in a downlink assignment for the data. The indicator indicates to the UE whether CRS resource elements, or CRS REs, are used for transmitting the data to the UE 800.

Some optional embodiments are possible in the above-described procedure of Fig. 7 and the UE of Fig. 8. In a possible embodiment, the indicator may be a PQI field in the downlink assignment. In another possible embodiment, the indicated mapping for the data channel may give the starting OFDM symbol for the data channel and/or may indicate that the data channel is not mapped to resource elements that can be associated with one or several CRS antenna ports. This embodiment will be described in more detail later below.

It should be noted that Figs 6 and 8 illustrates various functional units in the radio node 600 and the UE 800, respectively, and the skilled person is able to implement these functional units in practice using suitable software and hardware. Thus, the solution is generally not limited to the shown structures of the radio node 600 and the UE 800, and the functional units 600a-b and 800a-b may be configured to operate according to any of the features described in this disclosure, where appropriate.

The functional units 600a-b and 800a-b described above can be implemented in the radio node 600 and the UE 800, respectively, by means of program modules of a respective computer program comprising code means which, when run by a processor "P" in each node causes the radio node 600 and the UE 800 to perform the above-described actions and procedures. Each processor P may comprise a single Central Processing Unit (CPU), or could comprise two or more processing units. For example, each processor P may include a general purpose microprocessor, an instruction set processor and/or related chips sets and/or a special purpose microprocessor such as an Application Specific Integrated Circuit (ASIC). Each processor P may also comprise a storage for caching purposes.

Each computer program may be carried by a computer program product in each of the radio node 600 and the UE 800 in the form of a memory "M" having a computer readable medium and being connected to the processor P. The computer program product or memory M in each of the radio node 600 and the UE 800 thus comprises a computer readable medium on which the computer program is stored e.g. in the form of computer program modules "m". For example, the memory M may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the respective radio node 600 and UE 800.

In the following sections, some further features, aspects and advantages of using this solution in practice will be discussed which may be valid also for the embodiments described above, whenever appropriate.

Some criteria for shifting carrier type on the second frequency F2 from carrier type A to carrier type B and vice-versa will now be discussed. For example, some procedures for managing both legacy UEs A and new UEs B during such a shift may include:
- Signaling carrier type shifts to new UEs B. Various ways of implicit and explicit signaling may be defined.
- Use of a "light-weight" handover mechanism to switch between carriers while maintaining many common user and control plane parameters and configurations such as HARQ buffers and current ongoing transmissions, UE-specific ePDCCH, DMRS scrambling, CSI-RS configuration, MBMS presence, quasi-collocation configuration, RRC and C-RNTI configurations, etc.
- Ways of managing UEs during the shift. Various ways including the use of handovers and radio-link failures (RLF) mechanisms to perform the actual moving of UEs between the two carriers may be defined.

In this disclosure, we focus on the following:
- Embodiments for management of inter-frequency measurements on carrier frequency F2 by legacy UEs A while operating the carrier on frequency F2 substantially as carrier type B.
- Embodiments of carrier type B that increase the commonality between carrier types A and B to the extent that new UEs B do not need any signaling to indicate what carrier type is being used.
- Embodiments to use the carrier aggregation framework for managing fast switching between carrier type A and B on carrier frequency F2.

Existing solutions typically require the new UEs B to be signaled when the carrier type is switched. Some methods that may be defined include a light handover method and the ability to maintain the same parameters across the two carrier types to a large extent. The embodiments disclosed herein may be used to enhance the dynamic nature of switching between the carriers, by making the legacy carrier simply a mode of operation on the new carrier so that signaling of carrier type switches to new carriers may be avoided. Some of the embodiments may enhance the ability of the network to control access to the carrier by legacy UEs A, thus enhancing the speed with which carrier switching can be carried out. Some embodiments to enable the use of carrier aggregation based mechanisms to do this, will be discussed. Some embodiments are also outlined to enable inter-frequency measurements by legacy UEs A on the carrier frequency F2 on which carrier type B may substantially be transmitted.

Embodiments described herein may be used for operating a cellular network in a carrier aggregated mode where a secondary cell, "Scell", that is accessed by legacy UEs A is dynamically switched between a legacy carrier and a new carrier, i.e. the first and second carrier types A and B, respectively. This switch is transparent to new UEs B that are capable of operating on both carrier types. Signaling of the carrier type is not necessary for new or legacy UEs. When legacy UEs A need to access the Scell, the Scell is configured for those UEs and the carrier type on the Scell is switched to the legacy carrier type B, some subframes in advance of the configuration of the UEs. The carrier operates as the new carrier type B when the carrier is deactivated or deconfigured as an Scell for all legacy UEs.

In this description, it is assumed that the operator operates the two different frequencies F1 and F2 on which the basic operation is that carrier type A is deployed but the network has capability to also use carrier type B for a carrier frequency. It is understood that the embodiments that are described herein are not limited to an operator deployment with only two different frequencies and that a larger number of frequencies may also be used.

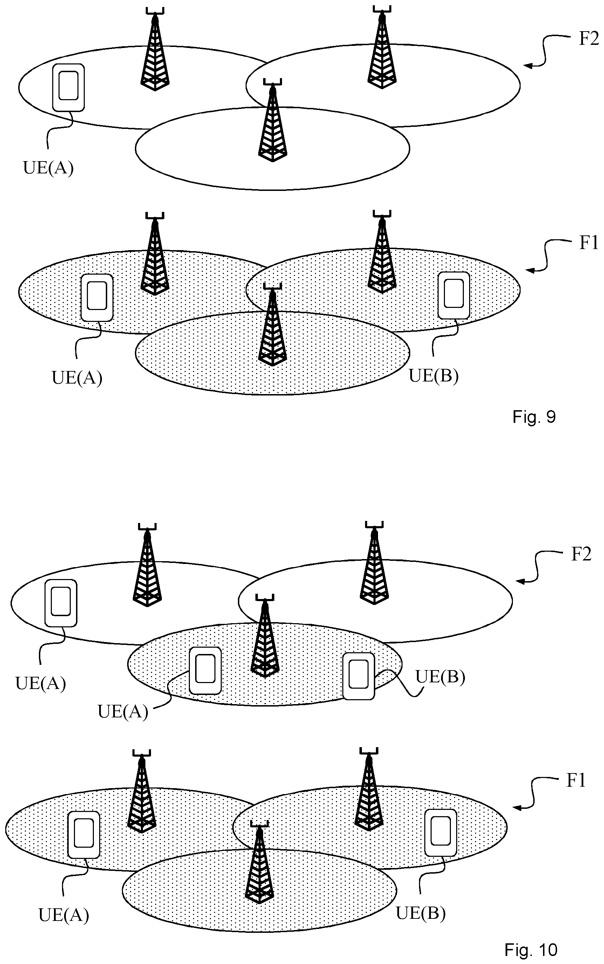

In one example, a network operator may generally deploy the network according to Figure 9 where dotted areas represent cells served with the first carrier type A and the blank areas represent cells served with the second carrier type B. When legacy UEs A, i.e. UEs that support operation only on carrier type A, are in IDLE mode they will camp on frequency F1 and new UEs B, i.e. UEs that supports operation on both carrier type A and carrier type B, will in IDLE mode camp on either frequency F1 or frequency F2. It is shown in the figure that the first frequency F1 is used for serving cells with carrier type A while the second frequency F2 is used for serving cells with carrier type B.

In another example, a network operator may deploy the network according to Fig. 10 which illustrates a communication scenario where a mix of a Legacy Carrier Type A and a New Carrier Type B is employed. In Fig. 10, dotted areas again represent cells served with the first carrier type A and the blank areas represent cells served with the second carrier type B. It is shown that the first frequency F1 is used for serving cells with carrier type A while the second frequency F2 is used for serving both cells with carrier type B and cells with carrier type A.

In a general setup the RRC_CONNECTED UEs including legacy UEs A and new UEs B will be connected to the same frequency layer as IDLE mode UEs. It may be possible, given certain criteria, to move legacy UEs A from frequency F1 towards F2 temporarily. At a high level, moving the legacy UEs A from F1 to F2 involves changing the transmitted carrier type on frequency F2 to a carrier type that a legacy UE A can receive, i.e. to carrier type A. It is further possible to move the legacy UEs A at a later stage from frequency F2 to frequency F1.

Further, a legacy or new UE may utilize both frequencies F1 and F2 at the same time also with features such as carrier aggregation or dual connectivity, assuming that the UEs can support the carrier type that is transmitted on each of the frequencies F1 and F2. In one possible embodiment, the carrier aggregation framework may be used to manage the dynamic switching of cells on frequency F2 between carrier type A and B.

Some possible procedures are further described for switching between carrier type A and B. This can further also be carried out as a partial switch to partly apply carrier type A that allows UEs supporting carrier type A to partially access the node. For example, switching to partly apply carrier type A may include only transmitting CRS and synchronization signals from the node and may for example not include transmission of PBCH, PDCCH and broadcast information. Such a switch to partly apply carrier type A would support UEs performing measurements only and UEs being cross carrier scheduled from another carrier. A second possibility is that the carrier supports PDCCH, CRS and synchronization signals only but not broadcast information. This would allow the carrier to act as a fully functional SCell but not as a standalone cell for UEs that do not support carrier type B.

It may further be so that for example CRS and PDCCH may be punctured for certain REs or PRBs if the information transmitted in those PRB pairs is very important for the system operation of carrier type B. For example resource elements REs that are occupied by ePBCH, common search space or broadcast information, i.e. system information, paging, and random access related information, may not contain CRS. If this is only a small portion of the system bandwidth, a legacy UE that only support carrier type A may be able to handle this and will view the missing CRS or PDCCH as fading dips. The CRS or PDCCH may be further punctured if they collide with important ePDCCH or/and PDSCH messages. This could be for example HO commands to a specific UE that are important for the UE to receive.

### Enabling inter-frequency measurements by UEs

In order to enable access to carrier frequency F2 for legacy UEs that are camped on, i.e. connected to, carrier frequency F1, measurement reports from these UEs are necessary to determine whether an UE is suitable for using frequency F2 and if so, which cell on frequency F2 should be chosen for the UE. When carrier frequency F2 is deployed with carrier type B, the measurement quality of legacy UEs may be affected due to the lack of CRS on carrier type B in some subframes. In order to ensure the quality of these measurement reports which are necessary for reliable access to frequency F2 by legacy UEs, the procedure in Fig. 11 may be used by a radio node or eNB. The actions in this procedure are briefly as follows:
**Action 1100** - Legacy UEs A camp on frequency F1 applying carrier type A and new UEs B camp on frequency F2 applying carrier type B.
**Action 1102** - It is determined whether any inter-frequency measurements are scheduled for a legacy UE A.
**Action 1104** - If so, frequency F2 is switched to applying carrier type A and CRSs are transmitted according to carrier type A.
**Action 1106** - The legacy UE A performs the scheduled inter-frequency measurements.
**Action 1108** - It is determined whether the legacy UE A has finished the inter-frequency measurements.
**Action 1110** - If so, frequency F2 is switched back to applying carrier type B and CRSs are not transmitted.

The default state could be for legacy UEs to be camped on frequency F1 and for newer UEs B to be camped on the frequency F2. The measurement intervals for inter-frequency measurements for all legacy UEs A could be configured so that many UEs measure during the same intervals.

For example, legacy UEs A that are to carry out inter-frequency measurements on carrier frequency F2 in measurement gaps of length 6 subframes and repetition period of 40 or 80 subframes may be configured by the network to use measurement gaps in fully overlapping, partially overlapping, adjacent, or nearby subframes depending on load conditions on the intra-frequency carrier frequency F1. In those subframes the eNB can switch the carrier type on frequency F2 to the first carrier type A. In the remaining subframes the eNB configures frequency F2 with carrier type B, see Fig. 12 illustrating measurement gap positions and switching of carrier type to serve legacy UEs. Fig. 12 illustrates that the eNB applies carrier type A on frequency F2 during an interval from time **t**₀ to **t**₁ and then switches at time **t**₁ to apply carrier type B on frequency F2 and then switches at time **t**₂ to apply carrier type A and once again switches at time **t**₃ to apply carrier type B, and so forth.

In this figure, both legacy UEs A and new UEs B can be configured with measurement gap positions A1 to AN, during which frequency F2 is of carrier type A, i.e. between **t**₀ and **t**₁ and between **t**₂ and **t**₃. Only new UEs B can be configured with measurement gap positions B1 to BM, during which frequency F2 is of carrier type B, i.e. between **t**₁ and **t**₂ and between **t**₃ and **t**₄. As mentioned above, a fraction of time where frequency F2 is of carrier type A may depend on load conditions, i.e. current traffic load, on frequency F1, i.e., the number of connected legacy UEs and the system throughput requested by those UEs.

Moreover, the eNB can configure legacy UEs to carry out measurements on frequency F2 during the same period of time, and then have some periods of time (several to tens of seconds) when no legacy UEs have an active measurement configuration for carrier frequency F2. Mobility (coverage) is provided by frequency F1, hence this is not critical for the mobility function.

The eNB may further reconfigure DRX for legacy UEs A such that when measurements are to be carried out for frequency F2, those are carried out according to non-DRX requirements. This allows the measurements on frequency F2 to be completed in shorter time than otherwise would be possible.

In case UEs have reported capability to do inter-frequency measurements without measurement gaps (in which case the eNB has no control over exactly when measurements are carried out), the eNB may configure all those UEs to perform measurements on frequency F2 during one and the same period of time, thus sharing the same measurement period, and during this time configure frequency F2 to carrier type A. The UE would only perform measurement on a certain frequency if the UE is configured to measure on that frequency. The time period shall exceed an inter-frequency measurement reporting period (minimum 480ms). See Figure 13 illustrating switching of carrier type to support UEs that do not use measurement gaps for inter-frequency and inter-RAT measurements. Such UEs are only having an active measurement configuration for frequency F2 during time interval T2, for which frequency F2 is configured to carrier type A only. During time intervals T1 and T3, frequency F2 is toggling between carrier type A and carrier type B as illustrated in Figure 13. The times provided for T1, T2, T3 are exemplary. Minimum requirement is that T2 exceeds an inter-frequency reporting period (minimum 480 ms), i.e. long enough to allow measurements on F2 to be completed during carrier type A before switching to carrier type B.

The eNB may further use the fact that a UE that does not have specific information about MBSFN usage in a target cell, will have to assume that measurements only can be carried out in subframes 0, 4, 5, 9 for FDD and subframes 0, 5 for TDD. This means that for subframes that potentially carry MBSFN, the eNB can configure carrier frequency F2 to be of type B.

### Blind detection of carrier types

When the carrier is switched from carrier type B to carrier type A, it is desirable if the new UEs B can continue operating on the carrier without any interruption. This can be achieved by using some form of explicit or implicit signaling of carrier type to the new UEs B. However, depending on the configuration of carrier type B, this may also be possible without any signaling.

In a possible embodiment, new UEs B perform blind detection of carrier type with some frequency, e.g., every subframe or once every five subframes. Detection of carrier type may be performed in any one of the following ways.
- The new UE B may use differences in the locations of the primary and secondary synchronization signals (PSS/SSS) on the carrier type B in relation to the carrier type A to detect the carrier type. Alternately, it may use differences in the relative spacing of the PSS and SSS. However, having different absolute or relative PSS/SSS locations on the new carrier makes it difficult for legacy UEs to make any measurements at all, such as signal strength measurements, on the new carrier type B.
- The new UE B may detect the presence or absence of CRS in the central 6 PRBs of subframes which carry the CRS for the carrier type A, but do not carry any CRS for the new carrier type B. In this case, legacy UEs A can make measurements on the new carrier at least on some subframes if the PSS/SSS locations between the carrier types A and B are common.
- The new UE B may also utilize other carrier type A signals for carrier type detection such as the Physical Control Format Indicator Channel, PCFICH, signal.

### Embodiments of carrier type B to enable fast switching capabilities

In one embodiment, transmission modes on the second carrier type B that don't use the CRS may be defined so that they can also be used on the first carrier type A. Signaling is included in a modification to an existing DCI format to indicate whether the CRS REs are used for data transmission to the UE in the associated PDSCH. Specifically, the so-called transmission mode 10 can be modified for use in this manner on the second carrier type B. Transmission mode 10 was introduced with Release 11 of 3GPP, and the transmission mode is based on scheduling data by Demodulation Reference Signals DM-RS, similar and utilized Channel State Information Reference Signals CSI-RS, and Channel State Information Interference Mitigation CSI-IM for channel feedback. Further, transmission mode 10 supports transmission based on DM-RS that may be-located with a configured CSI-RS.

DCI format 2D already has a "PDSCH RE Mapping and Quasi-co-colocation indicator field", PQI, that has the ability to dynamically signal the number of CRS ports, or CRS antenna ports, that should be assumed by the UE. LTE supports one or multiple CRS ports, where a CRS port corresponds to a cell specific reference signal, CRS. The CRS can for example be used by the UE for demodulating data and calculating CSI feedback. Such signaling can already be used to indicate the start symbol of the PDSCH as well. The number of CRS ports may be signaled by setting the PQI field to one of the parameter sets that are configured by the higher layers via RRC signaling with the parameter set containing the CRS configuration information. Currently, the higher layer signaling only allows configuration for one or more CRS ports.

In this embodiment, this configuration may be extended to also allow for zero CRS ports so that the PQI field can then be used to dynamically signal the presence of zero or more CRS ports. Legacy UEs A are not configured to have a parameter set correspond to this zero CRS option, while new UEs B may be configured this way via RRC signaling. Thus, even when the carrier is switched from type B to type A, transmission mode 10 with this PQI setting for one or more CRS ports may be used to continue transmissions to new UEs B. When the carrier is switched back to type B, the PQI can dynamically (on a subframe basis) signal the parameter set corresponding to zero CRS ports to ensure maximum performance for new UEs B. This avoids the need to explicitly signal a carrier type switch to new UEs B.

Another way to define the signaling is that "holes" are introduced in the PDSCH REs at certain positions. The UE receiving the DCI format may only need to know which PDSCH REs are used or are not used, to be able to perform the correct rate matching or puncturing assumption in the receiver. The information contained in the DCI format may not indicate whether the holes are actually occupied by CRS or not.

In order to support the fast switching between cell types, the ePDCCH on carrier type B may be configured directly with holes which may or may not be occupied by CRS. A second possibility would be that the ePDCCH occupies the CRS REs by default, but if CRS are transmitted by the network node then these puncture the specific REs.

A similar handling may be done with the PDCCH if it is switched on as an extension on carrier type B, i.e. either the ePDCCH does not start at the first OFDM symbol or PDCCH if present would puncture the ePDCCH. Note also that the new UEs B may detect the presence of and the number of OFDM symbols consumed by PDCCH by checking the presence and value of the PCFICH signal.

Another possibility is that PDCCH is not transmitted in all subframes so that the ePDCCH have different starting symbols in different subframes. Alternatively the network could also handle scheduling so that it only schedules UEs on PDCCH in certain subframes and limits the scheduling over ePDCCH in those subframes. In other subframes the network could schedule only UEs on ePDCCH. This enables utilizing the ePDCCH in a better way to avoid puncturing by the PDCCH.

### Switching Scell from LCT to NCT and vice-versa for carrier aggregated UEs

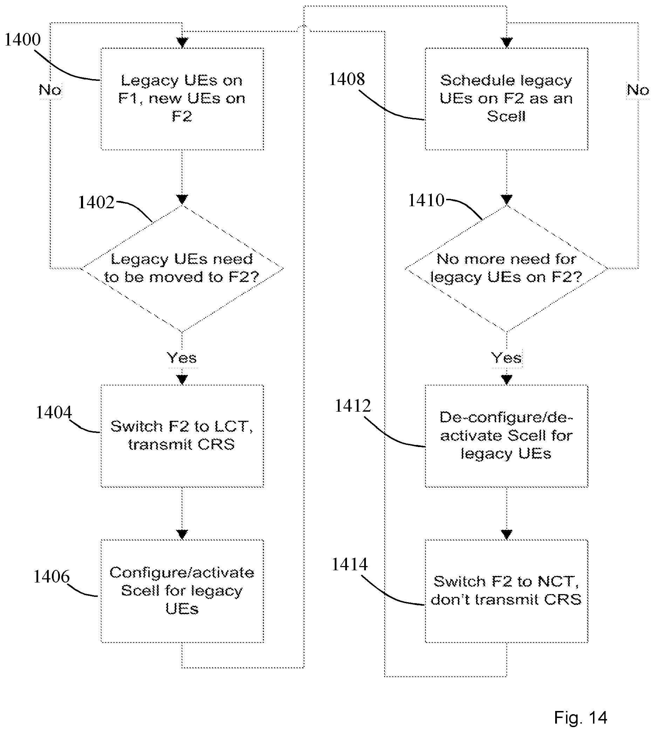

It may be desirable to be able to offload some legacy UEs A from carrier frequency F1 to carrier frequency F2, e.g. when there is a higher fraction of legacy UEs A in the system. Figure 14 shows an embodiment of this invention that allows legacy UEs A to access carrier frequency F2 in a very dynamic fashion. Initially, the frequency F1 may be configured as a carrier type A and the frequency F2 may be configured as carrier type B, as shown by an **action 1400.** When there is a need to move legacy UEs A to F2, indicated by Yes in **action 1402**, the carrier on frequency F2 is switched to a carrier type A (LCT) with CRS transmissions as shown by an **action 1404.** After the switch, legacy UEs A that are capable of carrier aggregation are configured to use an Scell on carrier frequency F2 as shown by an **action 1406.** The legacy UEs A can then be scheduled on the Scell on frequency F2, as shown by an **action 1408.** When it is determined that there is no more need for legacy UEs A on F2, indicated by Yes in **action 1410**, the Scells on F2 can be de-configured for those UEs that were previously configured for access to F2 as shown by an **action 1412.** After all UEs have been de-configured, the carrier on frequency F2 can be switched back to carrier type B as shown by an **action 1414.** New UEs B can continue to receive transmissions on frequency F2 even when it is switched to a carrier type A using the embodiments in the previous section.

In another possible embodiment, legacy UEs A may be configured with Scells on carrier frequency F2 even when F2 is deployed as a carrier type B. However, the Scells may be deactivated for these UEs. When the UEs make measurements on the Scells, the network may ignore or discard the measurements since the measurements may be of lower quality due to the lack of CRS in all subframes. When legacy UEs A are to be moved to frequency F2, the carrier type is switched to type A and the carrier is activated as an SCell for the legacy UEs A that will be scheduled on frequency F2.

For example, a method may be performed by a radio node of a cellular network, the radio node being operable for radio communication with a User Equipment, UE, on a first frequency F1 and a second frequency F2, wherein a first carrier type A is applicable for serving both legacy UEs and new UEs and a second carrier type B is applicable only for serving new UEs, and wherein the UE is a legacy UE configured to support the first carrier type A but not the second carrier type B. In this method, the radio node performs the following:
- configuring the UE with a first cell on the first frequency F1 and a second cell on the second frequency F2,
- applying the first carrier type A for downlink signals on the first frequency F1,
- switching between applying the second carrier type B and at least partly applying the first carrier type A for downlink signals on the second frequency F2 in order to allow the legacy UEs to measure and/or be served on the second frequency F2, and
- activating the second cell for the UE when the first carrier type A is applied and the UE is to measure and/or be served on the second frequency F2 and deactivating the second cell for the UE when the second carrier type B is applied.

The above radio node may further be described such that it comprises means configured to:
- configure the UE with a first cell on the first frequency F1 and a second cell on the second frequency F2,
- apply the first carrier type A for downlink signals on the first frequency F1,
- switching between applying the second carrier type B and at least partly applying the first carrier type A for downlink signals on the second frequency F2 in order to allow the legacy UEs to measure and/or be served on the second frequency F2, and
- activate the second cell for the UE when the first carrier type A is applied and the UE is to measure and/or be served on the second frequency F2 and deactivating the second cell for the UE when the second carrier type B is applied.

### Potential advantages

The embodiments described herein allow a way to operate the NCT in mixed deployment with a legacy carrier type. In this disclosure, these are referred to as carrier types B and A. This allows a gradual introduction of the NCT in networks, rather than having to operate a nationwide network with NCT directly from the start. It further allows ways to handle UEs not supporting the NCT operating on the same frequency as the NCT is deployed. Further, benefits may be provided with more dynamic carrier type switching capabilities and with reduced signaling as compared to existing methods.

While the solution has been described with reference to specific exemplary embodiments, the description is generally only intended to illustrate the inventive concept and should not be taken as limiting the scope of the solution. For example, the terms "radio node", "User Equipment, UE", "legacy UE", "new UE", "carrier type" and "Cell-specific Reference Signal, CRS" have been used throughout this description, although any other corresponding entities, functions, and/or parameters could also be used having the features and characteristics described here.

### Abbreviations

- BW: Bandwidth
- CFI: Control Format Indicator
- CRS: Cell-specific Reference Signal
- DC: Direct Current
- DCI: Downlink Control Information
- DFT: Discrete Fourier Transform
- ePDCCH: Enhanced PDCCH
- HO: Hand Over
- MBSFN: Multi-media Broadcast over Single Frequency Network
- MU-MIMO: Multi-User - Multiple Input Multiple Output
- OFDM: Orthogonal Frequency Division Multiplex
- PDCCH: Physical Downlink Control Channel
- PQI: PDSCH RE Mapping and Quasi-co-colocation Indicator
- PRB: Physical Resource Block
- RB: Resource Block
- RBG: Resource Block Group
- UE: User Equipment
- VRB: Virtual Resource Block

## Claims

1. A method performed by a radio node (600) of a cellular network, the radio node being operable for radio communication of data with User Equipments, UEs, the method comprising:
- applying (500) a first carrier type (A) to each subframe on a first frequency (F1) for sending downlink signals to legacy UEs and/or new UEs, and
- applying a second carrier type (B) to each subframe on a second frequency (F2) for sending downlink signals only to new UEs,
wherein new UEs are UEs which are determined by the radio node to support both the first carrier type and the second carrier type, wherein legacy UEs are UEs which are determined by the radio node to support only the first carrier type, and
said method being **characterized by** comprising, upon determining an event (504), the steps of:
configuring a first set of measurement gaps (A1-AN) spanning a plurality of subframes on the first frequency (F1) for the legacy UEs and/or the new UEs which are determined by the radio node to support measurement gaps; and
applying the first carrier type for sending downlink signals in said plurality of subframes on the second frequency, thereby allowing the legacy UEs and/or the new UEs supporting measurements gaps to perform signal measurements on the second frequency (F2) during the first set of measurement gaps, and
selectively applying on a subframe basis one of the first carrier type and the second carrier type for sending downlink signals in subframes on the second frequency other than said plurality of subframes, and/or
said method comprising, upon determining said event, the steps of:
configuring a second set of time intervals (T2, T4, ...) on the second frequency (F2) for the legacy UEs and/or the new UEs which are determined by the radio node not to support measurement gaps; and
applying the first carrier type for sending downlink signals in the subframes within said second set of time intervals (T2, T4...), thereby allowing the legacy UEs and/or the new UEs not supporting measurement gaps to perform signal measurements on the second frequency (F2) during the second set of time intervals (T2, T4...); and
selectively applying on a subframe basis one of the first carrier type and the second carrier type for sending downlink signals in subframes on the second frequency other than the subframes of said second set of time intervals.

2. A method according to claim 1, wherein the step of selectively applying on a subframe basis one of the first carrier type and the second carrier type comprises performing, for at least one of said new UEs, the step of:
- transmitting (506) to the UE (602) an indicator in a downlink assignment for data on a data channel, the indicator indicating to the UE whether Cell-specific Reference Signal, CRS, resource elements, REs, are used for transmitting the data to the UE, thereby indicating a data channel mapping to the UE.

3. A method according to claim 2, wherein the indicator indicates to the UE (602) a different data channel mapping depending on which one of the first carrier type (A) and the second carrier type (B) is applied.

4. A method according to claim 3, wherein the data channel is a Physical Downlink Shared Channel, PDSCH, wherein the indicator is a PDSCH RE Mapping and Quasi-colocation Indicator, PQI, field in the downlink assignment, wherein the data channel mapping gives the starting Orthogonal Frequency Division Multiplex, OFDM, symbol for the data channel and/or indicates whether the data channel is mapped to resource elements that are associated with one or several CRS antenna ports.

5. A method according to any of claims 1-4, wherein at least one legacy UE is instructed by the radio node to receive data both over the first frequency (F1) and over the second frequency (F2) in subframes in which the first carrier type A is applied.

6. A method according to any of claims 2-5, wherein a fraction of time for applying the first carrier type (A) for downlink signals on the second frequency (F2) is dependent on traffic load on the first frequency (F1).

7. A method according to any of claims 1-6, wherein the event occurs at certain time periods or after detecting (502) that the traffic load on the first frequency (F1) is above a threshold.

8. A method according to any of claims 1-7, wherein the radio node (600) enables the new UEs to distinguish between the second carrier type (B) and the first carrier type (A) on the second frequency (F2) by at least one of:
- explicit or implicit signalling of carrier type to the new UEs,
- different locations or different relative spacing of primary or secondary synchronization signals, PSS/SSS, on the second frequency (F2) for the first and second carrier types, and
- presence of Cell-specific Reference Signal, CRS, or other signals of the first carrier type on the second frequency (F2) when applying the first carrier type (A) and absence of CRS or other signals of the first carrier type on the second frequency (F2) when applying the second carrier type (B).

9. A radio node (600) comprising means adapted to perform the method of any of claims 1 to 8.

## Patentansprüche

1. Verfahren, das von einem Funkknoten (600) eines zellularen Netzwerks durchgeführt wird, wobei der Funkknoten zur Funkkommunikation von Daten mit Benutzereinrichtungen, UEs, ausgelegt ist, wobei das Verfahren umfasst:
- Anwenden (500) eines ersten Trägertyps (A) auf jeden Unterrahmen auf einer ersten Frequenz (F1) zum Senden von Downlink-Signalen an ältere UEs und/oder neue UEs, und
- Anwenden eines zweiten Trägertyps (B) auf jeden Unterrahmen auf einer zweiten Frequenz (F2) zum Senden von Downlink-Signalen nur an neue UEs,
wobei neue UEs UEs sind, von welchen durch den Funkknoten bestimmt wird, dass sie sowohl den ersten Trägertyp als auch den zweiten Trägertyp unterstützen, wobei ältere UEs UEs sind, von welchen durch den Funkknoten bestimmt wird, dass sie nur den ersten Trägertyp unterstützen, und
wobei das Verfahren **dadurch gekennzeichnet ist, dass** es bei Bestimmen eines Ereignisses (504) die folgenden Schritte umfasst:
Konfigurieren eines ersten Satzes von Messlücken (A1-AN), die sich über eine Mehrzahl von Unterrahmen auf der ersten Frequenz (F1) für die älteren UEs und/oder die neuen UEs erstrecken, von welchen durch den Funkknoten bestimmt wird, dass sie Messlücken unterstützen; und
Anwenden des ersten Trägertyps zum Senden von Downlink-Signalen in der Mehrzahl von Unterrahmen auf der zweiten Frequenz, um dadurch zu ermöglichen, dass die älteren UEs und/oder die neuen UEs, welche Messlücken unterstützen, Signalmessungen auf der zweiten Frequenz (F2) während des ersten Satzes von Messlücken durchführen, und
selektives Anwenden auf einer Unterrahmenbasis eines des ersten Trägertyps und des zweiten Trägertyps zum Senden von Downlink-Signalen in anderen Unterrahmen auf der zweiten Frequenz als der Mehrzahl von Unterrahmen, und/oder
wobei das Verfahren bei Bestimmen des Ereignisses die folgenden Schritte umfasst:
Konfigurieren eines zweiten Satzes von Zeitintervallen (T2, T4, ...) auf der zweiten Frequenz (F2) für die älteren UEs und/oder die neuen UEs, von welchen durch den Funkknoten bestimmt wird, dass sie Messlücken nicht unterstützen; und
Anwenden des ersten Trägertyps zum Senden von Downlink-Signalen in den Unterrahmen innerhalb des zweiten Satzes von Zeitintervallen (T2, T4, ...), um dadurch zu ermöglichen, dass die älteren UEs und/oder die neuen UEs, welche Messlücken nicht unterstützen, Signalmessungen auf der zweiten Frequenz (F2) während des zweiten Satzes von Zeitintervallen (T2, T4, ...) durchführen, und
selektives Anwenden auf einer Unterrahmenbasis eines des ersten Trägertyps und des zweiten Trägertyps zum Senden von Downlink-Signalen in anderen Unterrahmen auf der zweiten Frequenz als den Unterrahmen des zweiten Satzes von Zeitintervallen.

2. Verfahren nach Anspruch 1, wobei der Schritt des selektiven Anwendens auf einer Unterrahmenbasis eines des ersten Trägertyps und des zweiten Trägertyps ein Ausführen des folgenden Schrittes für mindestens eine der neuen UEs umfasst:
- Senden (506) an die UE (602) eines Indikators in einer Downlink-Zuordnung für Daten auf einem Datenkanal, wobei der Indikator der UE anzeigt, ob Ressourcenelemente, REs, eines zellspezifischen Referenzsignals, CRS, zum Senden der Daten an die UE verwendet werden, um dadurch der UE eine Datenkanalzuordnung anzuzeigen.

3. Verfahren nach Anspruch 2, wobei der Indikator der UE (602) in Abhängigkeit davon, welcher von dem ersten Trägertyp (A) und dem zweiten Trägertyp (B) angewendet wird, eine andere Datenkanalzuordnung anzeigt.

4. Verfahren nach Anspruch 3, wobei der Datenkanal ein gemeinsamer physikalischer Downlink-Kanal, PDSCH, ist, wobei der Indikator ein PDSCH-RE-Zuordnungs- und - Quasi-Colocation-Indikator, PQI,-Feld in der Downlink-Zuordnung ist, wobei die Datenkanalzuordnung das orthogonale Frequenzmultiplex, OFDM,-Anfangssymbol für den Datenkanal angibt und/oder anzeigt, ob der Datenkanal Ressourcenelementen zugeordnet ist, die mit einem oder mehreren CRS-Antennenanschlüssen assoziiert sind.

5. Verfahren nach einem der Ansprüche 1 bis 4, wobei mindestens eine ältere UE durch den Funkknoten angewiesen wird, Daten sowohl über die erste Frequenz (F1) als auch über die zweite Frequenz (F2) in Unterrahmen zu empfangen, in welchen der erste Trägertyp A angewendet wird.

6. Verfahren nach einem der Ansprüche 2 bis 5, wobei ein Zeitabschnitt zum Anwenden des ersten Trägertyps (A) für Downlink-Signale auf der zweiten Frequenz (F2) von Verkehrslast auf der ersten Frequenz (F1) abhängt.

7. Verfahren nach einem der Ansprüche 1 bis 6, wobei das Ereignis in bestimmten Zeiträumen oder nach einem Erkennen (502) eintritt, dass die Verkehrslast auf der ersten Frequenz (F1) über einer Schwelle ist.

8. Verfahren nach einem der Ansprüche 1 bis 7, wobei der Funkknoten (600) die neuen UEs zum Unterscheiden zwischen dem zweiten Trägertyp (B) und dem ersten Trägertyp (A) auf der zweiten Frequenz (F2) befähigt durch mindestens eines von:
- expliziter oder impliziter Signalisierung des Trägertyps an die UEs,
- verschiedenen Positionen oder unterschiedlichem relativen Abstand von primären oder sekundären Synchronisierungssignalen, PSS/SSS, auf der zweiten Frequenz (F2) für den ersten und den zweiten Trägertyp und
- Vorhandensein eines zellspezifischen Referenzsignals, CRS, oder anderer Signale des ersten Trägertyps auf der zweiten Frequenz (F2) bei Anwenden des ersten Trägertyps (A) und Nichtvorhandensein eines CRSs oder anderer Signalen des ersten Trägertyps auf der zweiten Frequenz (F2) bei Anwenden des zweiten Trägertyps (B) .

9. Funkknoten (600), umfassend Mittel, die zum Durchführen des Verfahrens nach einem der Ansprüche 1 bis 8 ausgelegt sind.

## Revendications

1. Procédé effectué par un nœud radio (600) d'un réseau cellulaire, le nœud radio étant utilisable pour une radiocommunication de données avec des équipements d'utilisateur, UE, le procédé comprenant :
- l'application (500) d'un premier type de porteuse (A) à chaque sous-trame sur une première fréquence (F1) pour envoyer des signaux de liaison descendante à des UE d'héritage et/ou des UE nouveaux, et
- l'application d'un deuxième type de porteuse (B) à chaque sous-trame sur une deuxième fréquence (F2) pour envoyer des signaux de liaison descendante uniquement à des UE nouveaux,
dans lequel des UE nouveaux sont des UE qui sont déterminés par le nœud radio comme prenant en charge à la fois le premier type de porteuse et le deuxième type de porteuse, dans lequel des UE d'héritage sont des UE qui sont déterminés par le nœud radio comme prenant en charge uniquement le premier type de porteuse, et
ledit procédé étant **caractérisé en ce qu'**il comprend, à la détermination d'un événement (504), les étapes de :
la configuration d'un premier ensemble de plages de mesures (A1-AN) couvrant une pluralité de sous-trames sur la première fréquence (F1) pour les UE d'héritage et/ou les UE nouveaux qui sont déterminés par le nœud radio comme prenant en charge des plages de mesures ; et
l'application du premier type de porteuse pour envoyer des signaux de liaison descendante dans ladite pluralité de sous-trames sur la deuxième fréquence, en permettant de ce fait aux UE d'héritage et/ou aux UE nouveaux prenant en charge des plages de mesures d'effectuer des mesures de signaux sur la deuxième fréquence (F2) au cours du premier ensemble de plages de mesures, et
l'application sélective, sur une base par sous-trame, de l'un du premier type de porteuse et du deuxième type de porteuse pour envoyer des signaux de liaison descendante dans des sous-trames sur la deuxième fréquence autres que ladite pluralité de sous-trames, et/ou
ledit procédé comprenant, à la détermination dudit événement, les étapes de :
la configuration d'un deuxième ensemble d'intervalles de temps (T2, T4, ...) sur la deuxième fréquence (F2) pour les UE d'héritage et/ou les UE nouveaux qui sont déterminés par le nœud radio comme ne prenant pas en charge des plages de mesures ; et
l'application du premier type de porteuse pour envoyer des signaux de liaison descendante dans les sous-trames à l'intérieur dudit deuxième ensemble d'intervalles de temps (T2, T4, ...), en permettant de ce fait aux UE d'héritage et/ou aux UE nouveaux ne prenant pas en charge de plage de mesures d'effectuer des mesures de signaux sur la deuxième fréquence (F2) au cours du deuxième ensemble d'intervalles de temps (T2, T4, ...) ; et
l'application sélective, sur une base par sous-trame, de l'un du premier type de porteuse et du deuxième type de porteuse pour envoyer des signaux de liaison descendante dans des sous-trames sur la deuxième fréquence autres que les sous-trames dudit deuxième ensemble d'intervalles de temps

2. Procédé selon la revendication 1, dans lequel l'étape de l'application sélective, sur une base par sous-trame, de l'un du premier type de porteuse et du deuxième type de porteuse comprend l'exécution, pour au moins l'un desdits UE nouveaux, de l'étape de :
- la transmission (506), à destination de l'UE (602), d'un indicateur dans une assignation de liaison descendante pour des données sur un canal de données, l'indicateur indiquant à l'UE si des éléments de ressources, RE, de signal de référence spécifique à la cellule, CRS, sont utilisés pour transmettre les données à destination de l'UE, en indiquant de ce fait un mappage de canal de données à l'UE.

3. Procédé selon la revendication 2, dans lequel l'indicateur indique à l'UE (602) un mappage de canal de données différent en fonction de celui du premier type de porteuse (A) et du deuxième type de porteuse (B) qui est appliqué.

4. Procédé selon la revendication 3, dans lequel le canal de données est un canal partagé de liaison descendante physique, PDSCH, dans lequel l'indicateur est un champ PDSCH RE Mapping and Quasi-colocation Indicator, PQI, dans l'assignation de liaison descendante, dans lequel le mappage de canal de données donne le symbole de multiplexage par répartition de fréquence orthogonale, OFDM, de début pour le canal de données et/ou indique si le canal de données est mappé avec des éléments de ressources qui sont associés à un ou plusieurs ports d'antenne CRS.

5. Procédé selon l'une quelconque des revendications 1 à 4, dans lequel le nœud radio instruit à au moins un UE d'héritage de recevoir des données à la fois sur la première fréquence (F1) et sur la deuxième fréquence (F2) dans des sous-trames dans lesquelles le premier type de porteuse A est appliqué.

6. Procédé selon l'une quelconque des revendications 2 à 5, dans lequel une fraction de temps pour l'application du premier type de porteuse (A) pour des signaux de liaison descendante sur la deuxième fréquence (F2) dépend d'une charge de trafic sur la première fréquence (F1) .

7. Procédé selon l'une quelconque des revendications 1 à 6, dans lequel l'événement survient à certaines périodes de temps ou après la détection (502) que la charge de trafic sur la première fréquence (F1) est supérieure à un seuil.

8. Procédé selon l'une quelconque des revendications 1 à 7, dans lequel le nœud radio (600) permet aux UE nouveaux de faire la distinction entre le deuxième type de porteuse (B) et le premier type de porteuse (A) sur la deuxième fréquence (F2) par au moins l'un de :
- la signalisation explicite ou implicite du type de porteuse aux UE nouveaux,
- différents emplacements ou différents espacements relatifs de signaux de synchronisation primaires ou secondaires, PSS/SSS, sur la deuxième fréquence (F2) pour les premier et deuxième types de porteuse, et
- la présence d'un signal de référence spécifique à la cellule, CRS, ou d'autres signaux du premier type de porteuse sur la deuxième fréquence (F2) lors de l'application du premier type de porteuse (A) et l'absence de CRS ou d'autres signaux du premier type de porteuse sur la deuxième fréquence (F2) lors de l'application du deuxième type de porteuse (B).

9. Nœud radio (600) comprenant des moyens aptes à effectuer le procédé selon l'une quelconque des revendications 1 à 8.
